**Europäisches Patentamt**

**European Patent Office**

**Office européen des brevets**

(19)

(11) Publication number : **0 599 575 A1**

(12) # EUROPEAN PATENT APPLICATION

(21) Application number : **93309284.3**

(22) Date of filing : **22.11.93**

(51) Int. Cl.⁵ : **B60C 15/00, B60C 15/06**

(30) Priority : **24.11.92 JP 313484/92**

(43) Date of publication of application :
**01.06.94 Bulletin 94/22**

(84) Designated Contracting States :
**FR GB LU**

(71) Applicant : **BRIDGESTONE CORPORATION**
**10-1, Kyobashi 1-Chome**
**Chuo-Ku**
**Tokyo 104 (JP)**

(72) Inventor : **Shoyama, Yoshinobu**
**3-4-4-405, Ogawa-higashi-cho**
**Kodaira-shi, Tokyo (JP)**

(74) Representative : **Whalley, Kevin**
**MARKS & CLERK,**
**57/60 Lincoln's Inn Fields**
**London WC2A 3LS (GB)**

(54) **Airplane radial tire.**

(57)   An airplane radial tire having an up/down carcass structure (i.e., a carcass structure with up and down plies), in which end portions of carcass up plies (26) are disposed so as to be dispersed respectively at an outer side and an inner side in a radial direction of the tire of a region (38) of the tire in which stress concentrates when the tire is in a loaded state. The end portions (26A) of the carcass up plies which are positioned at the outer side of the region in the radial direction of the tire are disposed at a distance, from an end (140) of an inner circumference of the tire, of at least 1.7 times a height of a rim flange so as to be disposed at an inner side in the radial direction of the tire of a perpendicular line (P). which passes through a maximum width point (160) of the tire and is perpendicular to an intermediate portion of the carcass up plies, and at an outer side of the end of the inner circumference of the tire.

FIG. 1

EP 0 599 575 A1

Jouve, 18, rue Saint-Denis, 75001 PARIS

The present invention relates to an airplane radial tire which is used for a passenger jet airplane or the like.

In an airplane radial tire which is used in a state in which the tire is inflated to a high internal pressure, a so-called "up/down carcass structure" (i.e., a carcass structure with up and down plies) is employed. With the "up/down carcass structure", it is possible to effectively prevent burst defects which are generated when end portions of carcass plies fastened to and around a bead core are pulled out after the end portions are separated from the rubber which covers the end portions.

As this up/down carcass structure, there has been known a structure which has a plurality of carcass up plies arranged in layers in a radial direction of the tire and extending along an inner surface of the tire. Respective end portions of the plurality of carcass up plies are wound upwardly around a bead core from an inner side of the tire in a transverse direction of the tire toward an outer side of the tire in the radial direction of the tire. A plurality of down plies is disposed at the outer side in the radial direction of the tire of the plurality of up plies, and respective end portions of the plurality of down plies wind around the bead core and extend along the inner surface of the tire from the outer side of the tire in the transverse direction of the tire. When the plurality of carcass up plies and the plurality of carcass down plies are employed, the respective end portions of the up and down plies are arranged such that their respective positions are sequentially offset in a stepped configuration. As a result, formation of a nucleus of cut separation, which results from stress concentration caused by the overlapped end portions of the carcass plies, is prevented.

Even when this up/down carcass structure is used, however, cut separation may occur depending upon the arrangement of the end portions of the carcass up plies. Namely, since an airplane radial tire is used in a high-load state and with a large deflection applied thereto, the bead portion is subject to a large bending deformation when the tire rotates with a load applied thereto. The tire is therefore subject to a large contact pressure at the portion of the tire which contacts a rim flange. Accordingly, when the end portions of the carcass up plies are disposed within a region in which the tire contacts the rim flange, stress is concentrated on this region, so that cut separation may occur threat.

Japanese Patent Application Laid-Open No. 64-47605 (1989) discloses a structure in which a plurality of carcass up plies are layered and end portions of the carcass up plies are disposed above the bead core and are arranged so as to extend along an intermediate portion of the carcass up plies. With this structure, in a region of the tire in which the carcass plies contacting the rim flange deform largely when the tire rotates with a load applied thereto, the turned-up portions of the carcass up plies are layered so that the entire carcass layer becomes thick. As a result, compressive strain generated in the carcass down plies which are positioned near the outer surface of the tire becomes large and durability of the carcass down plies decreases.

Therefore, the present inventors developed a structure in which, as disclosed in Japanese Patent Application Laid-Open No. 3-21508 (1991), the end portions of the carcass up plies are disposed at both outer sides of a carcass region which is interposed between the line which passes through the portion in which a tire outer surface contacts a rim flange when the tire is in an unloaded state and the line which passes through the portion in which the tire outer surface contacts the rim flange when the tire is at 200% load, both lines being perpendicular to the intermediate portion of the carcass up plies. This technique prevents the occurrence of cut separation in the end portions of the carcass up plies when the tire is at 200% load and also prevents durability of the carcass down plies from decreasing.

Even though this up/down carcass structure results in the aforementioned effects, when the end portions of the carcass up plies are disposed in a region of the tire in which, when the tire is at standard internal pressure, large strain is applied in a direction along a transverse direction of the carcass plies (in particular, in the vicinity of a shoulder portion), there is the fear that a cut separation may occur in the end portions of the carcass up plies due to repeated deflection which results from that the tire being used a long period of time. Therefore, there is room for improvement with respect to this point.

In view of the aforementioned facts, it is an object of the present invention to provide an airplane radial tire having an up/down carcass structure, and capable of preventing the occurrence of cut separation around end portions of the carcass up plies and deterioration of the durability of carcass down plies, even when the tire is in a high-load condition (at 200% of standard load) and even when the tire is used for a long period of time.

In accordance with a first aspect of the present invention, there is provided an airplane radial tire including: a plurality of carcass up plies arranged in layers such that an intermediate portion of the plurality of carcass up plies is disposed along an inner surface of the tire, end portions of the plurality of carcass up plies being respectively turned upwardly around a bead core from an inner side in a transverse direction of the tire toward an outer side in a radial direction of the tire; and a plurality of carcass down plies arranged such that an intermediate portion of the plurality of carcass down plies is disposed along the inner surface of the tire at an outer side of the intermediate portion of the plurality of carcass up plies, end portions of the plurality of carcass down plies being respectively turned around the bead core from an outer side in the transverse direction of the tire, wherein the end portions of the plurality of carcass up plies are disposed so as to be dispersed respectively at outer and inner sides, in the radial direction of the tire, of a region of the tire interposed between a first perpendicular line which is perpendicular to the intermediate portion of the carcass up plies and passes through a point at which an outer surface of the tire is separated from a rim flange when the tire is at standard internal pressure and is in an unloaded state, and a second perpendicular line which is perpendicular to the intermediate portion of the carcass up plies and passes through a point at which the outer surface of the tire is separated from the rim flange when the tire is at standard internal pressure and is at 200% of standard load, and wherein the end portions of the plurality of carcass up plies, which are disposed at the outer side of the region of the tire in the radial direction of the tire, are disposed at a distance, from an end of the inner circumference of the tire, of at least 1.7 times a height of the rim flange, and the end portions of the carcass up plies are disposed between the end of the inner circumference of the tire and a third perpendicular line which is perpendicular to the intermediate portion of the carcass up plies and passes through a maximum width point of the tire when the tire is at standard internal pressure and is in an unloaded state.

Since the end portions of the carcass up plies are disposed outside the aforementioned region of the tire, when the tire is at 200% or less, cut separation, which is caused by a concentration of stress on the end portions of the carcass up plies, does not occur. In this case, the 200% load condition is used as a standard because the tire having the structure described above is used as one of dual tires and must bear 200% load when the other tire is punctured. Therefore, the tire of the present invention is designed so as to prevent the occurrence of cut separation.

Further, since the end portions of the carcass up plies are disposed so as to be dispersed respectively at both outer sides of the aforementioned region of the tire, the entire carcass layer within the region does not become thick and compressive strain generated in the carcass down plies when the tire rotates with a load applied thereto does not become large. As a result, durability of the carcass down plies does not deteriorate. Even if the end portions of the carcass up plies are disposed at the inner side of the aforementioned region in the radial direction of the tire, it is also possible to prevent the entire carcass layer from thickening. However, in this case, since the length of the carcass at the turned-up portion is short, a force acting to pull out the end portions of the carcass plies increases due to internal pressure of the tire. Therefore, in this case, it is not possible to effectively prevent burst defects generated by the carcass plies being pulled out due to a cut separation formed in the end portions of the carcass plies.

Further, the end portions of the carcass up plies, which are disposed at the outer side of the aforementioned region in the radial direction of the tire, are disposed from the end of the inner circumference of the tire (a bead toe) at a distance of more than 1.7 times the height of the rim flange (based on TRA standards). Accordingly, the occurrence of cut separation can be reliably prevented. Namely, since a region of the tire in the vicinity of the point in which the outer surface of the tire separates from the rim flange is subject to a large deformation when the tire rotates with a load applied thereto, if the end portions of the carcass up plies are disposed at the distance of more than 1.7 times the height of the rim flange from the end of the inner circumference of the tire, further concentration of stress is not generated on and around the end portions of the carcass up plies.

In addition, when the tire is used for a long period of time, the rubber of the ply end portions is subject to a large number of repeated distortions in a direction along an axial direction of the carcass ply cords when the tire rotates, so that a cut separation having a nucleus in the end portions of the plies may occur. In order to decrease fatigue of the rubber of the end portions of the ply cords resulting from the repeated distortion, it is important that the end portions of the plies should be disposed at a portion of the tire in which the strain of the plies generated in a direction along the axial direction of the carcass ply cords when the tire is at standard internal pressure, i.e., an initial strain, is small.

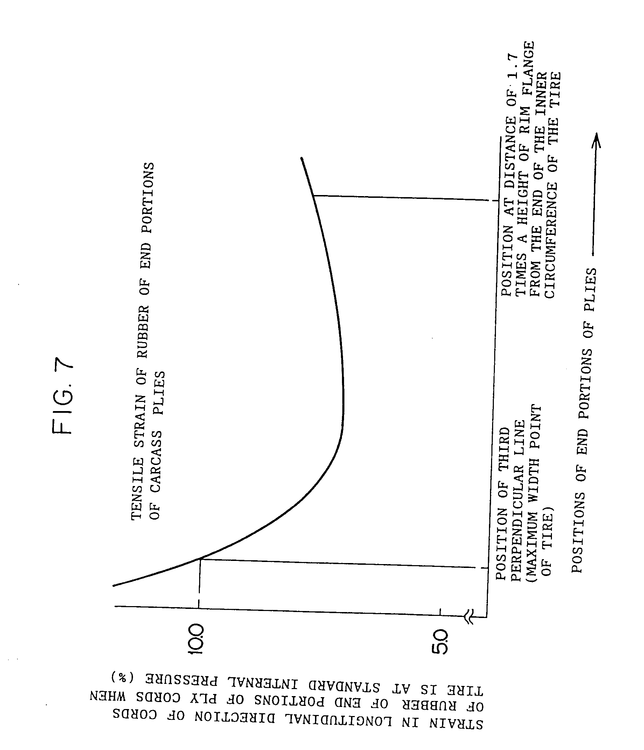

The graph of Fig. 7 illustrates the relationship between the amount of strain of the rubber of the end portions of the carcass up plies in a direction along an axial direction of the carcass ply cords and the respective positions of the end portions of the carcass up plies when the tire is at a standard internal pressure.

According to this graph, it is clear that, when the end portions of the carcass up plies are disposed between the third perpendicular line (the maximum width point of the tire) and the end of the inner circumference of the tire, the strain of the rubber of the ply end portions is suppressed to less than or equal to 10%, thereby preventing the occurrence of cut separation.

In the present invention, it is preferable that, at a position apart from a point at which the turned-up portion of one carcass up ply contacts the intermediate portion of that carcass up ply, an end portion of another carcass up ply is positioned. The portion at which the turned-up portion of the carcass up ply begins to contact the intermediate portion of the carcass up ply is easily subject to a concentration of strain due to the movement of the plies when the tire rotates with a load applied thereto. Consequently, when the end portions of the other carcass up plies are not disposed in this portion, it is possible to prevent occurrence of cut separation in this portion.

BRIEF DESCRIPTION OF THE DRAWINGS

Fig. 1 is an enlarged cross-sectional view of a principal portion of an airplane radial tire in accordance with a first embodiment of the present invention.

Fig. 2 is a cross-sectional view illustrating an overall construction of the airplane radial tire in accordance with the first embodiment of the present invention.

Fig. 3 is an enlarged cross-sectional view of a carcass up ply of the airplane radial tire in accordance with the first embodiment of the present invention.

Fig. 4 is a cross-sectional view of a principal portion of a structure of an airplane radial tire of comparative example 1, the structure corresponding to that of Fig. 1.

Fig. 5 is a cross-sectional view of a principal portion of a structure of an airplane radial tire of comparative example 2, the structure corresponding to that of Fig. 1.

Fig. 6 is a cross-sectional view of a principal portion of a structure of an airplane radial tire of comparative example 3, the structure corresponding to that of Fig. 1.

Fig. 7 is a graph illustrating the amount of tensile strain of rubber of end portions of the carcass up plies at respective positions of the end portions.

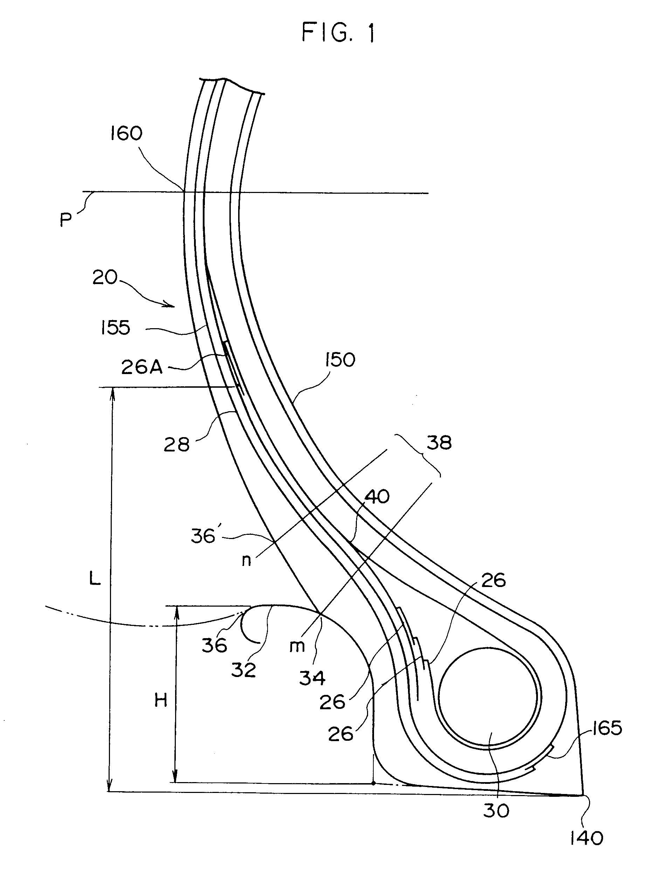

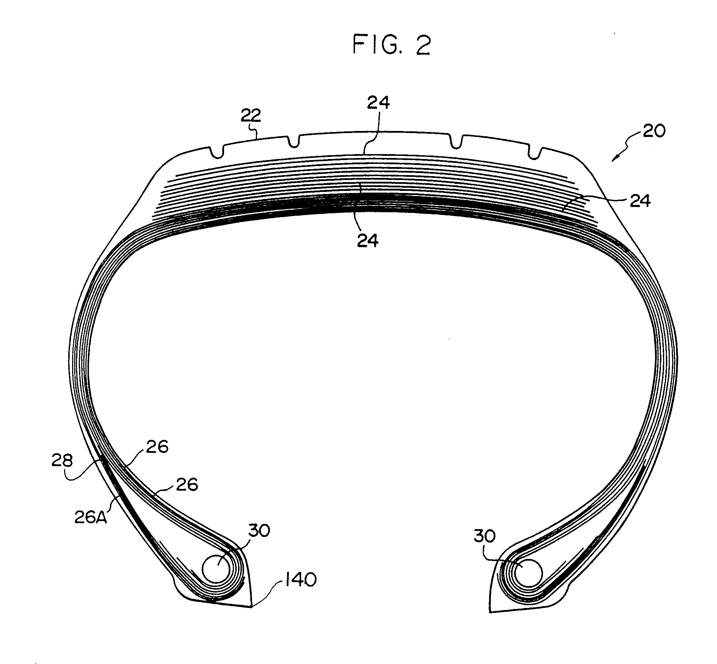

Referring now to Figs. 1 and 2, there are shown cross-sectional configurations of an airplane radial tire 20 in accordance with the present invention. Fig. 1 shows an enlarged cross-sectional view of a portion in the vicinity of a bead core 30 of the radial tire 20 illustrated in Fig. 2.

The radial tire 20 is provided with a belt 24 on an inner side of a tread 22 in the radial direction of the tire, as illustrated in Fig. 2. A plurality of the belts 24 is provided and is disposed so as to be layered in the radial direction of the tire.

A carcass up ply 26 and a carcass down ply 28 are provided along the inner surface of the tire on the inner side of the plurality of belts 24 in the radial direction of the tire. A plurality of carcass up plies 26 is provided so as to extend along the inner surface of the tire and be layered in the radial direction of the tire.

The respective end portions of the plurality of carcass up plies 26 are turned around the bead core 30 along the inner surface of the tire from the inner side in the radial direction of the tire toward the outer side of the tire in the radial direction thereof, so as to form a stepped configuration. Namely, the plurality of carcass up plies 26 each have different dimensions in length and are respectively turned around the bead core 30 from the inner side of the tire in a transverse direction thereof in order from the shortest carcass up ply 26. Thus, as the carcass up ply 26 is disposed further outwardly in the radial direction of the bead core 30, the end portion of the carcass up ply 26 is also located further apart from the bead core 30 toward the outer side in the radial direction of the tire. A turned-up portion 26A of the carcass up ply 26 located at the outermost side in the radial direction of the bead core 30 extends along an intermediate portion of the carcass up plies 26, which runs along the inner surface of the tire. Here the intermediate portion of the carcass up plies 26 refers to a continuous portion 150 between the portion in which the carcass up plies 26 begin to turn around one bead core and the portion in which the carcass up plies 26 begin to turn around another bead core. The turned-up portion of the carcass up ply refers to a portion of the carcass up ply 26 which extends toward the outer side in the radial direction of the tire after turning around the bead core 30.

A plurality of carcass down plies 28 is disposed in layers between the carcass up plies 26 and the belts 24. The respective end portions of the carcass down plies 28 are turned around the bead core 30 along the inner surface of the tire from the outer side of the tire in a transverse direction thereof, so that the respective end portions of the carcass down plies 28 are formed into a stepped configuration in the vicinity of the end 140 (a bead toe) of the inner circumference of the tire. Namely, the plurality of carcass down plies 28 each have different dimensions in length and are turned around the bead core 30 from the outer side of the tire in the transverse direction thereof in order from the longest carcass down ply 28. The respective lengths of the portions of the carcass down plies 28 turning around the bead core 30 decrease in accordance with the distance of the carcass down ply 28 from the bead core 30 in the radial direction of the bead core, i.e., the further away from the bead core 30, the shorter the turn around length of the carcass down ply 28.

In the case of the radial tire 20 having the structure described above, in the deformation process of the tire from the time when the tire is an unloaded state to the time when the tire is at 200% load, the respective end portions of the carcass up plies 26 do not exist within a region of the tire in which the outer surface of the tire may contact the rim flange 32.

This structure will now be explained in further detail. The end of the turned-up portion 26A of the carcass up ply 26 must be positioned at the outer side in the radial direction of the tire of a region 38 interposed between a first perpendicular line m and a second perpendicular line n. The first perpendicular line m is perpendicular to the intermediate portion of the carcass up plies 26 and passes through a point 34 at which the outer surface of the tire separates from the rim flange 32 when the tire is at standard internal pressure and is in an unloaded state (indicated by a solid line in Fig. 1). The second perpendicular line n is perpendicular to the intermediate portion of the carcass up plies 26 and passes through a point 36' when the tire is at standard internal pressure and is unloaded. When the tire is at standard internal pressure and at 200% load, the second perpendicular line n passes through point 36 rather than point 36'. The point 36 is located on the two-dot chain line in Fig. 1 representing the state of the outer surface of the tire at standard internal pressure and at 200% load. In addition, the end of the turned-up portion 26A of the carcass up ply 26 must be positioned apart from an end of the inner circumference of the tire at the outer side in the radial direction of the tire at a distance of more than 1.7 times a height H of the rim flange 32 (which is defined by TRA standards) from the end of the inner circumference of the tire (indicated by "L" in Fig. 1), and must be disposed between the end 140 of the inner circumference of the tire and a perpendicular line P which passes through the maximum width point 160 of the tire when the tire is at standard internal pressure and is in an unloaded state and which is perpendicular to the intermediate portion of the carcass up plies 26. As illustrated in Fig. 1, respective end portions of the other carcass up plies 26 are disposed at the inner side of the region 38 in the radial direction of the tire. Further, the end portions of the other carcass up plies 26 are disposed to be offset, in the radial direction of the tire, from a starting point 40 at which the turned-up portion 26A of the carcass up ply 26 begins to extend along the intermediate portion of the carcass up plies 26.

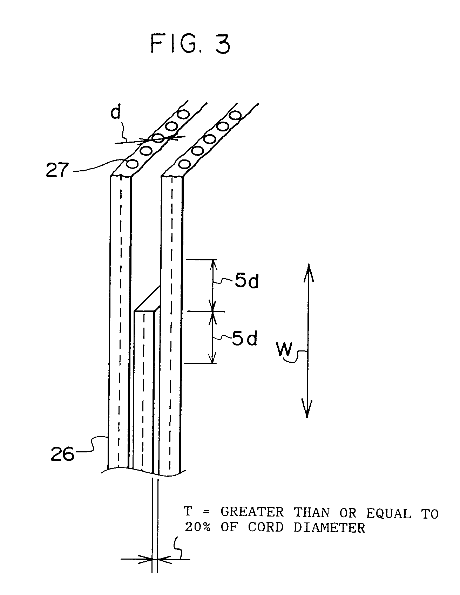

As illustrated in Fig. 3, it is preferable that the end portions of the carcass up plies 26 are arranged such that, in a range of a length of five times a cord diameter d of a cord 27 from the end portion in a direction (indicated by an arrow W) in which the respective axes of the cords of the carcass up plies 26 are arranged, an interval T between the adjacent carcass plies is more than or equal to 20% of the cord diameter d. This range is located at both sides of the end portion of the carcass up ply in the direction of arrow W.

In accordance with the aforementioned structure, the end portions of the carcass plies do not exist within the region 38 in which the outer surface of the tire contacts the rim flange 32 as the tire deforms from an unloaded state to a state of being at 200% load. As a result, even if the tire is subject to a load of 200% or below, the drawback of stress concentrating on the end portions of the carcass plies so as to generate cut separation does not occur. Particularly, since the end of the turned-up portion 26A of the carcass up ply 26, which is positioned at the outer side of the region 38 in the radial direction of the tire, is disposed at the outer side in the radial direction of the tire at a distance of more than 1.7 times the height H of the rim flange 32 from the end of the inner circumference of the tire, even if the tire deforms largely in the vicinity of the outer surface thereof and the rim flange 32 when the tire rotates with a load applied thereto, the effect of the stress concentration on the end of the turned-up portion 26A of the carcass up ply 26, which is caused by the deformation, is small. This is effective for preventing the occurrence of cut separation.

Moreover, since the turned-up portion 26A of the carcass up ply 26 is disposed between the perpendicular line P and the end 140 of the inner circumference of the tire, strain, in the longitudinal direction of the cords, of the rubber of the end portion of the carcass up ply 26 becomes small in a state in which the tire is at standard internal pressure. Further, since a clearance of at least 20% of the length of the cord diameter d exists between the end portion of the carcass up ply 26 and the adjacent carcass ply, shearing strain between the adjacent carcass plies becomes small, thereby effectively preventing the occurrence of cut separation at a time of traveling for a long period of time.

Further, since the respective ends of the carcass up plies 26, which are disposed at the inner side of the region 38 in the radial direction of the tire, are offset, in the radial direction of the tire, from the starting point 40 at which the turned-up portion 26A of the carcass up ply 26 begins to extend along the intermediate portion of the carcass up plies 26, the tire is not subject to a large effect of strain caused by the motion of each ply when the tire rotates with a load applied thereto. This is also effective for preventing the occurrence of cut separation.

Moreover, since the end portions of the carcass up plies 26 are disposed so as to be dispersed at the inner side and the outer side of the region 38 in the radial direction of the tire, the end portions do not concentrate at the outer side of the region 38 in the radial direction of the tire, thereby preventing thickening of the carcass layer. Further, since compressive strain generated in the carcass down plies 28 does not increase when the tire rotates with a load applied thereto, the durability of the carcass down plies 28 does not deteriorate.

It is possible to prevent thickening of the carcass layer within the region 38 by disposing the end portions of the carcass up plies 26 at the inner side of the region 38 in the radial direction of the tire. However, in this case, a drawback occurs in that it is not possible to effectively prevent a burst defect which is generated by the end portions of the carcass plies being pulled out after cut separation of the end portions occurs.

The end portions of the carcass up plies can be disposed so as to be dispersed at the inner side and the outer side of the region 38 in the radial direction of the tire in any arbitrary manner. As illustrated in Fig. 1, for example, two carcass up plies may be disposed at the outer side of the region 38 in the radial direction of the tire and three carcass up plies may be disposed at the inner side thereof. Further, these up plies may be arranged in the opposite way.

Experimental Example 1

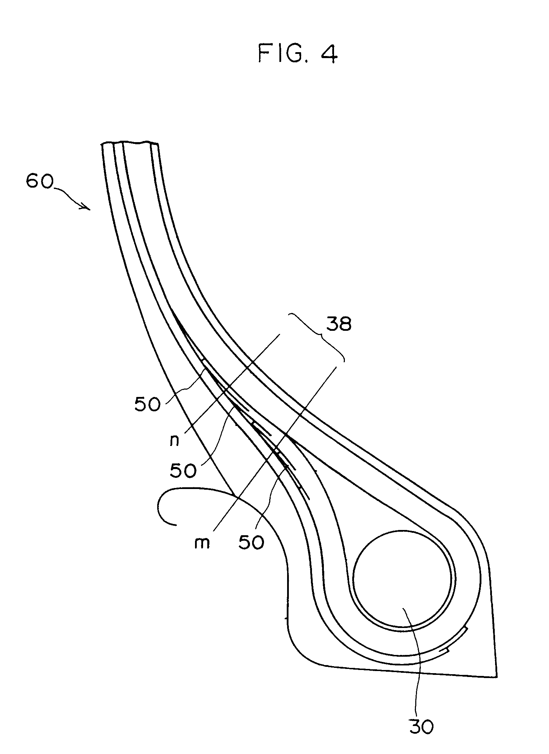

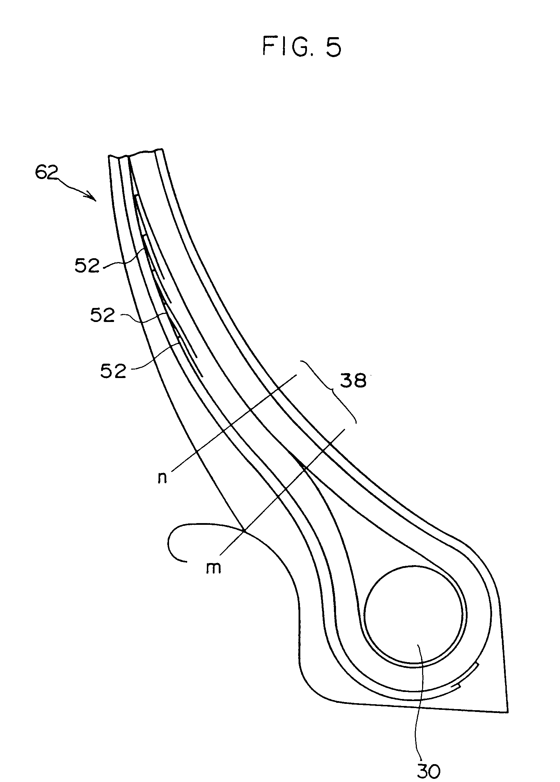

The radial tire 20 of the present embodiment illustrated in Figs. 1 and 2, an airplane radial tire 60 of Comparative Example 1 illustrated in Fig. 4, and an airplane radial tire 62 of Comparative Example 2 illustrated in Fig. 5 were manufactured in accordance with the specifications listed in Table 1. Each tire was subject to a drum test fifty times. The tire was driven on a drum at an internal pressure of 15.6 kg/cm$^2$ (standard internal pressure), at a load of 55200 lbs (25040 kg) which is 120% load, at a speed of 40 MPH (64.4 km/h), and for a distance of 35000 ft (16068 m) each time.

Experimental Example 2

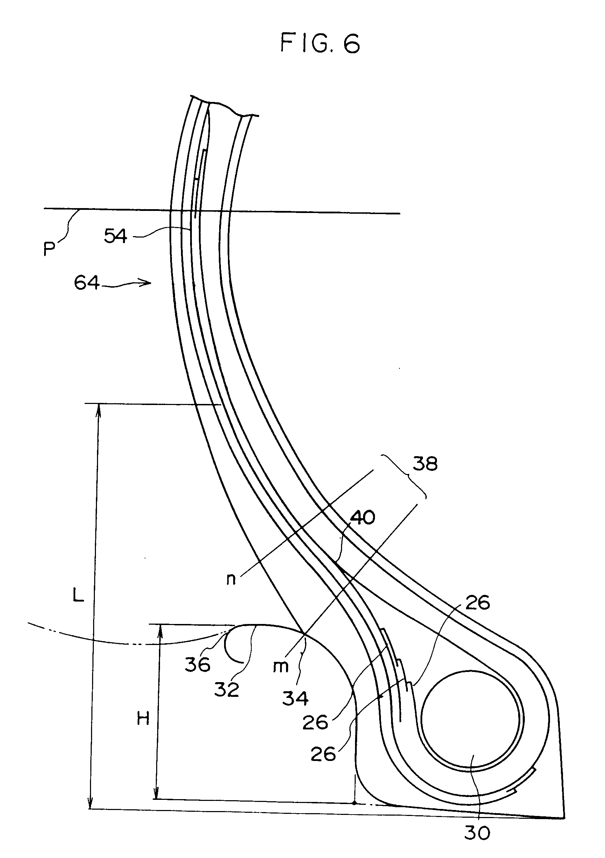

The radial tire 20 of the present embodiment and an airplane radial tire 64 of Comparative Example 3 illustrated in Fig. 6 were manufactured in accordance with the specifications listed in Table 1. Each tire was subject to a drum test eight hundred times. The tire was driven on a drum at an internal pressure of 15.6 kg/cm$^2$, at a load of 36800 lbs (16695 kg) which is 80% load, at a speed of 40 MPH (64.4 km/h), and for a distance of 35000 ft (16068 m) each time. After the drum test was performed, the respective tires were analyzed and the defects of each tire were investigated.

The airplane radial tire 60 (Comparative Example 1) shown in Fig. 4 is constructed such that respective end portions of carcass up plies 50 are disposed within a region which corresponds to the tire region 38 according to the present embodiment. Further, the airplane radial tire 62 (Comparative Example 2) shown in Fig. 5 is constructed such that respective end portions of carcass plies 52 are disposed at the outer side, in the radial direction of the tire, of a region which corresponds to the tire region 38 according to the present embodiment. Still further, the airplane radial tire 64 (Comparative Example 3) shown in Fig. 6 is constructed such that respective end portions of carcass plies 54 are disposed at the outer side, in the radial direction of the tire, of the perpendicular line P of the tire according to the present embodiment.

Further, it is noted that, for the airplane radial tires 60, 62, and 64 respectively shown in Figs. 4, 5, and 6, the interval T between the end portion of one up ply and the adjacent carcass ply is 10% of the cord diameter d.

TABLE 1

| type of tire<br><br>speci-<br>fication | present embodiment | comparative example 1 | comparative example 2 | comparative example 3 |
|---|---|---|---|---|
| size of tire | 46 × 17R20 | 46 × 17R20 | 46 × 17R20 | 46 × 17R20 |
| belt | belt cords, each comprised of three pieces of Nylon 66 of 1890 denier twisted together and crossing each other so as to be inclined at an angle of 18° with respect to the circumferential direction of the tire | same as present embodiment | same as present embodiment | same as present embodiment |
| carcass up ply | five up plies are provided, each being comprised of three pieces of Nylon 66 of 1890 denier twisted together | same as present embodiment | same as present embodiment | same as present embodiment |
| carcass down ply | two down plies are provided, each being comprised of three pieces of Nylon 66 of 1890 denier twisted together | same as present embodiment | same as present embodiment | same as present embodiment |

In experimental example 1, in the airplane radial tire 60 of comparative example 1, a cut separation was generated in the vicinity of the end portions of the carcass up plies during the drum test, so that the tire could no longer be driven, as illustrated in Table 2 below. Further, although the airplane radial tire 62 of comparative example 2 was driven the entire distance of the test, breaking-off of a cord in a portion of the carcass down plies was noted. In comparison, the defects of the airplane radial tires of comparative examples 1 and 2 were not generated in the airplane radial tire according to the present embodiment.

TABLE 2

| type of tire  contents of experiment | present embodiment | comparative example 1 | comparative example 2 |
|---|---|---|---|
| defects at a drum test | no | yes (cut separation formed from the vicinity of the end portions of the carcass up plies, so that the tire could no longer be driven midway through the experiment) | yes (breaking-off of cords in a portion of the carcass down plies) |

Further, in experimental example 2. in the airplane radial tire 64 of comparative example 3, cut separations of 5 to 20 mm were formed in the vicinities of the end portions of the carcass up plies in the entire circumference of the tire. In comparison, the defects of the airplane radial tire of the comparative example 3 were not formed in the airplane radial tire according to the present embodiment.

TABLE 3

| type of tire contents of experiment | present embodiment | comparative example 3 |
|---|---|---|
| defects at a drum test | no | yes (cut separation of 5 to 20 mm formed from the vicinity of the end portions of the carcass up plies) |

As explained above, since the airplane radial tire of the present invention has the structure described above, even if the tire is used in a state of being at 200% of standard load and is used for a long period of time, it is possible to solve the drawbacks of cut separation occurring around the end portions of the carcass up plies and durability of the carcass down plies deteriorating.

**Claims**

1. An airplane radial tire comprising:

a plurality of carcass up plies (26) arranged in layers such that an intermediate portion (150) of said plurality of carcass up plies is disposed along an inner surface of the tire, end portions (26) of said plurality of carcass up plies being respectively turned upwardly around a bead core (30) from an inner side in a transverse direction of the tire toward an outer side in a radial direction of the tire; and

a plurality of carcass down plies (28) arranged such that an intermediate portion (155) of said plurality of carcass down plies is disposed along the inner surface of the tire at an outer side of the intermediate portion (150) of said plurality of carcass up plies, end portions (165) of said plurality of carcass down plies being respectively turned around the bead core (30) from an outer side in the transverse direction of the tire,

said airplane radial tire being characterized in that the end portions (26A) of said plurality of carcass up plies are disposed so as to be dispersed respectively at outer and inner sides, in the radial direction of the tire, of a region (38) of the tire interposed between a first perpendicular line (m) which is perpendicular to the intermediate portion of said carcass up plies and passes through a point (34) at which an outer surface of the tire is separated from a rim flange (32) when the tire is at standard internal pressure and is in an unloaded state, and a second perpendicular line (n) which is perpendicular to the intermediate portion of said carcass up plies and passes through a point (36) at which the outer surface of the tire is separated from the rim flange (32) when the tire is at standard internal pressure and is at 200% of standard load, and

the end portions (26A) of said plurality of carcass up plies, which are disposed at the outer side of said region (38) of the tire in the radial direction of the tire, are disposed at a distance, from an end (140) of the inner circumference of the tire, of at least 1.7 times a height of the rim flange, and the end portions of said carcass up plies are disposed between the end (140) of the inner circumference of the tire and a third perpendicular line which is perpendicular to the intermediate portion (150) of the carcass up plies and passes through a maximum width point (160) of the tire when the tire is at standard internal pressure and is in an unloaded state.

2. An airplane radial tire according to claim 1, wherein, at positions apart from a point (40) at which a turned-up portion of a carcass up ply contacts the intermediate portion of one of carcass up plies, respective end portions (26) of other carcass up plies are disposed.

3. An airplane radial tire according to claim 1, wherein, in a region of a length of at least five times a cord diameter from an end of each carcass up ply (26) in an axial direction of cords of the carcass up ply, an interval between adjacent carcass up plies is greater than or equal to 20% of the cord diameter.

4. An airplane radial tire according to claim 1, wherein said plurality of carcass up plies (26), each having different lengths, are sequentially turned around the bead core (30) in order from a shortest carcass up ply so that, as the carcass up ply is distanced from the bead core (30) in a radial direction of the bead core, the end portion of the carcass up ply is disposed further apart from the bead core in the radial direction of the tire.

5. An airplane radial tire according to claim 4, wherein the end portions of said carcass up plies (26) are dispersed so as to form a stepped configuration.

6. An airplane radial tire according to claim 1, wherein said plurality of carcass down plies (28), each having different lengths, are sequentially turned around the bead core (30) from the outer side in the transverse direction of the tire in order from a longest carcass down ply.

# FIG. 1

FIG. 2

## FIG. 3

T = GREATER THAN OR EQUAL TO
20% OF CORD DIAMETER

FIG. 4

# FIG. 5

# FIG. 6

## FIG. 7

STRAIN IN LONGITUDINAL DIRECTION OF CORDS OF RUBBER OF END PORTIONS OF PLY CORDS WHEN TIRE IS AT STANDARD INTERNAL PRESSURE (%)

TENSILE STRAIN OF RUBBER OF END PORTIONS OF CARCASS PLIES

10.0

5.0

POSITION OF THIRD PERPENDICULAR LINE (MAXIMUM WIDTH POINT OF TIRE)

POSITION AT DISTANCE OF 1.7 TIMES A HEIGHT OF RIM FLANGE FROM THE END OF THE INNER CIRCUMFERENCE OF THE TIRE

POSITIONS OF END PORTIONS OF PLIES

EP 0 599 575 A1

EP 0 599 575 A1

**European Patent Office**

## EUROPEAN SEARCH REPORT

Application Number

EP 93 30 9284

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | DE-A-19 64 575 (UNIROYAL ENGLEBERT REIFEN GMBH) <br> * page 5 - page 7, line 5; claims; figures * | 1,2,4-6 | B60C15/00 <br> B60C15/06 |
| Y,D | DATABASE WPI <br> Week 9111, <br> Derwent Publications Ltd., London, GB; <br> AN 91-76134 <br> & JP-A-30 215 508 (BRIDGESTONE CORP.) 30 January 1991 <br> * abstract * | 1,2,4-6 | |
| A,D | PATENT ABSTRACTS OF JAPAN <br> vol. 13, no. 237 (M-833)5 June 1989 <br> & JP-A-01 047 605 (SUMITOMO RUBBER IND. LTD.) 22 February 1989 <br> * abstract * | 1,2,4-6 | |
| A | EP-A-0 447 200 (SUMITOMO RUBBER IND. LTD.) <br> * claims; figures * | 3 | |
| A | DE-A-29 12 637 (CONTINENTAL AG.) <br> * claim 2; figure 3 * | 3 | TECHNICAL FIELDS SEARCHED (Int.Cl.5) <br><br> B60C |
| A | US-A-5 085 260 (K.UEYOKO ET AL.) <br> * column 6, line 44 - column 8, line 24; figures 2,4 * | 1,5,6 | |

The present search report has been drawn up for all claims

| Place of search | Date of completion of the search | Examiner |
|---|---|---|
| THE HAGUE | 15 February 1994 | Baradat, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)